# EUROPÄISCHE PATENTSCHRIFT

(11) **EP 0 612 942 B1**
(45) Veröffentlichungstag und Bekanntmachung des Hinweises auf die Patenterteilung: **22.05.1996**
(21) Anmeldenummer: 94102115.6
(22) Anmeldetag: 11.02.1994
(51) Int. Cl.: F16K 31/60

(54) **Griff für Sanitärarmaturen**
Handle for sanitary valve
Poignée pour robinet sanitaire

(30) Priorität: 26.02.1993 DE 4305950
(43) Veröffentlichungstag der Anmeldung: 31.08.1994
(73) Patentinhaber: FRIEDRICH GROHE AKTIENGESELLSCHAFT, D-58675 Hemer (DE)
(72) Erfinder: Humpert, Jürgen, D-58675 (DE); Heimann, Bruno, D-58730 Fröndenberg (DE)

(56) Entgegenhaltungen:
- DE-A- 1 675 417
- DE-A- 3 322 715
- FR-A- 2 620 509

## Beschreibung

Die Erfindung betrifft einen haubenförmigen Griff, insbesondere Drehgriff, für Sanitärarmaturen mit den im Oberbegriff des Anspruch 1 angegebenen Merkmalen.
Ein Griff dieser Gattung ist aus der DE-A-3322715 bekannt. Hierbei ist eine dünne Metallkappe auf einem Innenteil angeordnet, wobei der Hohlraum zwischen dem Innenteil und der Metallkappe mit einer erhärtenden Füllmasse oder Gießharz ausgefüllt werden soll.
Die Zusammenmontage des bekannten Griffs mit dem Einbringen des Gießharzes ist jedoch relativ aufwendig. Außerdem erfordert die Aushärtung des Gießharzes einen bestimmten Zeitraum.

Ferner ist ein einstückig im Messingguß hergestellter Griff beispielsweise aus der deutschen Patentschrift 1675417 bekannt.

Der Erfindung liegt die Aufgabe zugrunde, den im Oberbegriff des Anspruch 1 aufgeführten Griff zu verbessern, so daß eine günstigere Herstellung ermöglicht wird.
Diese Aufgabe wird erfindungsgemäß mit den Merkmalen des Anspruch 1 gelöst.

Weitere Ausgestaltungen der Erfindung sind in den Ansprüchen 2 bis 9 angegeben.

Mit den erfindungsgemäßen Maßnahmen kann der Griff zweiteilig aus einer Griffhülse bzw. Metallhülse und einem Griffeinsatz bzw. Tragkörper hergestellt und einfach zusammengefügt werden. Ein Einbringen von Gießharz bei dem Zusammenfügen des Griffs ist nicht mehr erforderlich.
Zweckmäßig weist die konische Griffhülse nach innen gedrückte Griffmulden auf, wobei der Tragkörper so ausgebildet ist, daß die Griffmulden eine verdrehsichere Halterung zum Tragkörper herstellen.
Der obere Rand der Metallhülse wird von einem an dem Griffeinsatz bzw. Tragkörper ausgebildeten Flansch abgedeckt, so daß evtl. auftretende Unregelmäßigkeiten am oberen Rand der Griffhülse weder optisch noch funktionell wirksam werden. Der untere Rand der Metallhülse wird zweckmäßig in seiner Stecklage auf dem Tragkörper von einem unteren Flansch aufgenommen, wobei an ihm ein Kragen ausgebildet ist, hinter den die Metallhülse in der Stecklage schnappt und die Metallhülse mit dem Tragkörper fest verankert, so daß auch durch diese Verrastung eventuell vorhandene Unregelmäßigkeiten am unteren Rand der Metallhülse optisch und funktional angepaßt werden. Die Metallhülse kann hierbei durch einen relativ einfachen Ablängvorgang von einem Messingrohrhalbzeug und anschließenden Drück- und/oder Pressvorgängen preiswert hergestellt werden. Der erfindungsgemäße Tragkörper kann zweckmäßig im Kunststoffspritzverfahren hergestellt werden, wobei der große Flansch vorteilhaft mit Radialstegen am Tragkörper angeformt ist, so daß der Hinterschnitt im oberen Bereich mit seitlich ziehbaren Backen der Spritzgießform, ohne Klappkern, erzeugt werden kann.

Ein Ausführungsbeispiel der Erfindung ist in der Zeichnung dargestellt und wird im folgenden näher beschrieben. Es zeigt
- Figur 1: einen Drehgriff im Seitenschnitt in vergrößerter Darstellung;
- Figur 2: eine Hälfte des in Figur 1 gezeigten Drehgriffs in Druntersicht;
- Figur 3: den in Figur 1 gezeigten Tragkörper in einer um 90° gedrehten Schnittdarstellung;
- Figur 4: den in Figur 3 gezeigten Tragkörper in Druntersicht;
- Figur 5: den in Figur 3 gezeigten Tragkörper in Draufsicht;
- Figur 6: die in Figur 1 gezeigte Metallhülse im Längsschnitt;
- Figur 7: die in Figur 6 gezeigte Metallhülse in Draufsicht.

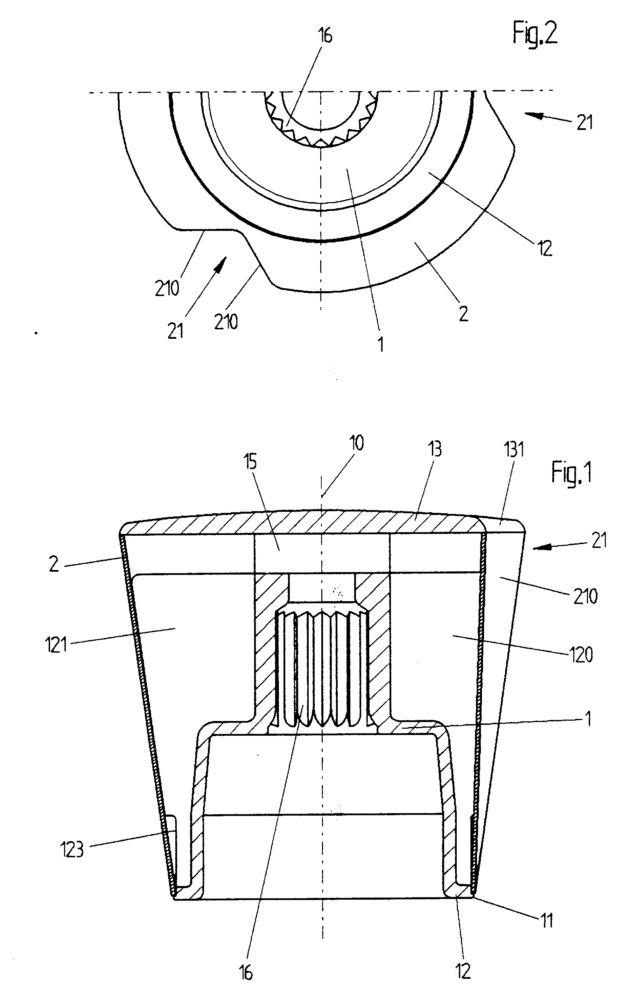

Der in den Figuren 1 und 2 gezeigte Drehgriff besteht aus einem Tragkörper 1 und einer Metallhülse 2. Der Drehgriff ist für die Betätigung von Ventiloberteilen in Sanitärarmaturen vorgesehen. Zur Befestigung wird der Drehgriff axial auf eine vorkragende Oberteilventilspindel (in der Zeichnung nicht dargestellt) aufgesteckt, wobei mit Hilfe einer Verzahnung 16 eine drehfeste Verbindung zur Ventilspindel hergestellt wird.

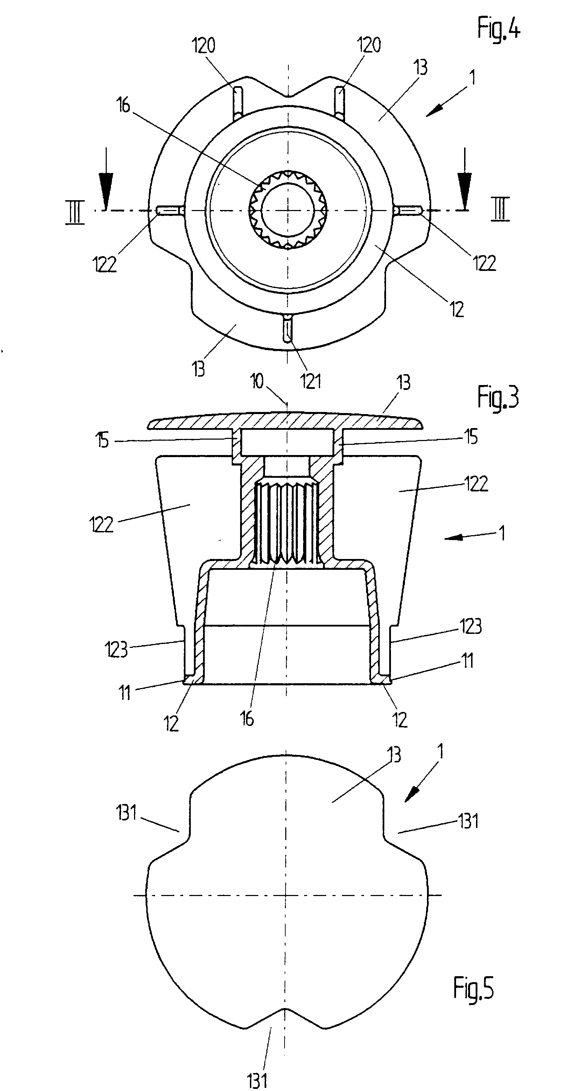

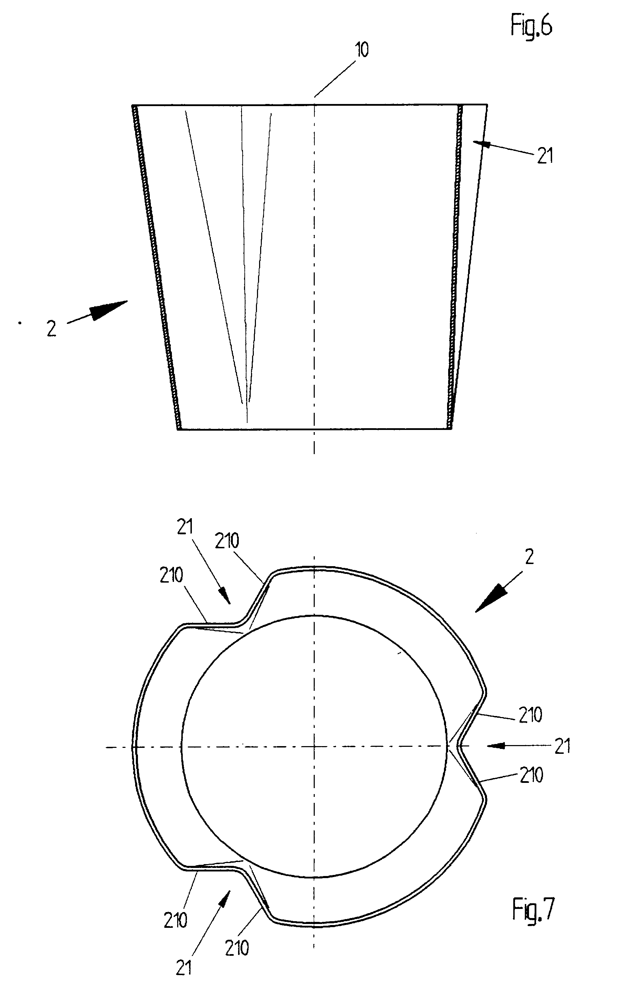

Die axiale Halterung des Drehgriffs auf der Ventilspindel kann mit bekannten Rastmitteln erfolgen.
Der Tragkörper 1 ist im Spritzgießverfahren aus Kunststoff hergestellt. An einem rotationssymmetrisch zur Mittelachse 10 ausgebildeten nabenartigen Körper mit der Verzahnung 16 ist an der im Durchmesser größeren Stirnseite ein Flansch 13 mit etwa zwei parallel zueinander angeordneten Radialstegen 15 am Umfangsbereich angeformt. An der gegenüberliegenden Stirnseite an dem nabenartigen Körper ist ein ringförmiger Flansch 12 ausgebildet, an dem ein radial vorstehender, umlaufender Kragen 11 angeformt ist. Parallel zur Mittelachse 10 sind außerdem radial vorstehende Längsrippen 120, 121,122 an dem nabenförmigen Körper angeformt, wie es insbesondere aus Figur 4 zu entnehmen ist. An der einen Hälfte des Tragkörpers 1 ist eine Längsrippe 121 und parallel zu dieser Längsrippe sind an der anderen Hälfte zwei weitere Längsrippen 120 angeformt. Im Bereich der Teilungsebene der beiden Hälften sind außerdem zwei gegenüberliegende Längsrippen 122 vorgesehen. Darüber hinaus weist der Flansch 13 am Außenbereich drei symmetrisch auf dem Außenumfang des Flansches angeordnete Ausnehmungen 131 auf, die in ihrer Formgebung den in der Metallhülse 2 vorgesehenen Griffmulden 21 entsprechen. Durch diese Formgestaltung kann der Tragkörper 1 im Spritzgießverfahren mit relativ einfachen Formwerkzeugen hergestellt werden, wobei die Trennebene der Spritzgießform in der Ebene der Längsrippen 122 vorgesehen wird. Die Ausnehmungen 131 im Flansch 13 sind dabei so dimensioniert und angeordnet, daß ein Entformen ermöglicht ist. Durch die parallel angeordneten Radialstege 15 ist darüber hinaus eine einwandfreie Herstellung einer glatten und geschlossenen Oberfläche des Flansches 13 ermöglicht, wobei außerdem in dem von den Radialstegen 15 begrenzten Radialschlitz Rastmittel zur axialen Fixierung des Tragkörpers 1 auf einer Ventilspindel vorgesehen werden können.
Die Metallhülse 2 ist aus einem Messingrohr mit einer Wandungsstärke von 0,5 mm hergestellt. Von dem Messingrohr als Halbzeug werden entsprechend der Länge der Metallhülse 2 Stücke abgelängt und anschließend durch einen Preß- und/oder Drückvorgang konisch geformt, wobei symmetrisch in der Mantelfläche drei Griffmulden 21 eingedrückt werden, wie es insbesondere aus Figur 6 und 7 ersichtlich ist. Die Griffmulden 21 weisen jeweils an der Stirnseite der Metallhülse 2 mit dem großen Durchmesser die größte Eindrückung auf, die - entsprechend der Verjüngung der Metallhülse 2 - fortlaufend verringert ausgebildet ist, so daß die Stirnseite mit dem kleinen Durchmesser der Metallhülse einen etwa kreisrunden Querschnitt aufweist. Die Griffmulden 21 sind hierbei so ausgebildet und angeordnet, daß zwei benachbarte Griffmulden 21 mit ihren nächstgelegenen Seitenflächen 210 etwa parallel zueinander angeordnet sind. Durch diese Ausbildung wird insbesondere ermöglicht, daß bei der Herstellung des zugehörigen Tragkörpers 1 ein günstiges Entformen des Flansches 13 gewährleistet ist.
Nach der Formgebung der Metallhülse 2 kann diese an der Außenmantelfläche mit einer Dekorbeschichtung versehen werden. Diese kann beispielsweise nach einem Poliervorgang in einer galvanischen Chrombeschichtung oder aber in einer Pulverlackierung bestehen.

Das Zusammenfügen der beiden als Einzelteile fertig hergestellten Teile, nämlich Metallhülse 2 und Tragkörper 1, kann in folgender Weise durchgeführt werden:
Die konisch ausgebildete Metallhülse 2 mit den drei symmetrisch angeordneten Griffmulden 21 im Mantel wird auf den Tragkörper 1 aufgeschoben, wobei die Stirnseite mit dem kleinen Durchmesser abschließend über den radial vorstehenden Kragen 11 des Flansches 12 hinübergeschoben wird, so daß in der Stecklage die Stirnseite mit dem kleinen Durchmesser der Metallhülse 2 hinter den radial vorstehenden Kragen 11 des Tragkörpers 1 schnappt. In dieser Position liegt die Metallhülse 2 mit der einen Stirnseite an dem Flansch 13 und der anderen Stirnseite an dem Flansch 12 an. Außerdem sind die Längsrippen 120,121,122 so dimensioniert, daß der konische Mantelbereich der Metallhülse 2 von ihren Stirnseiten abgestützt wird. Die Drehsicherung der Metallhülse 2 auf dem Tragkörper 1 erfolgt mit einer Griffmulde 21, die drehfest zwischen den beiden Längsrippen 120 gehalten ist.
Um eine einwandfreie Verrastung im Bereich des radial vorstehenden Kragens 11 zu gewährleisten, haben die Längsrippen 120,121,122 im Bereich des Flansches 12 jeweils eine Ausnehmung 123. Damit eine einwandfreie, sichtbare Oberfläche des Flansches 13 erzeugbar ist, sind außerdem die Längsrippen 120,121,122 lediglich bis in den Bereich der Radialstege 15 ausgebildet.

## Patentansprüche

1. Haubenförmiger Griff, insbesondere Drehgriff, für Sanitärarmaturen, der mit einem Innenteil zur Kupplung mit einem Ventiloberteil und einem die Grifform bestimmenden, metallischen Griffkörper versehen ist, wobei der Innenteil als Tragkörper (1) ausgebildet ist, auf dem als Griffkörper eine Metallhülse (2) gehalten ist, wobei die offenen Stirnseiten der Metallhülse (2) von dem Tragkörper (1) verschlossen sind, dadurch gekennzeichnet, daß die Metallhülse (2) im wesentlichen konisch geformt ist, daß an dem Tragkörper (1) an den beiden stirnseitigen Endbereichen Flansche (12,13) zur axialen Sicherung der Metallhülse (2) an den Stirnseiten vorgesehen sind, während in der Mantelfläche der Metallhülse (2) eine oder mehrere Griffmulden (21) eingeformt sind, mit denen eine drehfeste Kupplung zwischen dem Tragkörper (1) und der Metallhülse (2) in der Stecklage erfolgt.

2. Griff nach Anspruch 1, dadurch gekennzeichnet, daß die Metallhülse (2) mit ihrem konisch verjüngten Bereich der Armatur zugekehrt ist, wobei zur Sicherung in der Stecklage die der Armatur zugekehrte Stirnseite der Metallhülse (2) hinter einen radial vorstehenden Kragen (11) des Tragkörpers (1) schnappt.

3. Griff nach Anspruch 1 oder 2, dadurch gekennzeichnet, daß die Metallhülse (2) von parallel zur Mittelachse (10) am Tragkörper (1) angeformten Längsrippen (120,121,122) im Mantelbereich gestützt ist.

4. Griff nach einem der Ansprüche 1 bis 3, dadurch gekennzeichnet, daß die Metallhülse (2) aus Messingrohr mit einer Wandstärke von etwa 0,5 mm geformt ist.

5. Griff nach einem der Ansprüche 1 bis 4, dadurch gekennzeichnet, daß der Tragkörper (1) aus Kunststoff im Spritzgießverfahren hergestellt ist.

6. Griff nach einem der Ansprüche 1 bis 5, dadurch gekennzeichnet, daß drei symmetrisch angeordnete Griffmulden (21) im Mantel der konischen Metallhülse (2) eingedrückt sind, derart, daß die nächstgelegenen Seitenflächen (210) zwei benachbarter Griffmulden (21) etwa parallel zueinander angeordnet sind und jede Griffmulde (21) an der Stirnseite mit dem großen Durchmesser die größte Eindrükkung aufweist, die entsprechend der Verjüngung der Metallhülse (2) fortlaufend verringert ist, so daß die Stirnseite mit dem kleinen Durchmesser der Metallhülse (2) einen kreisrunden Querschnitt aufweist.

7. Griff nach Anspruch 6, dadurch gekennzeichnet, daß wenigstens drei parallel zueinenander geformte Längsrippen (120,121) am Tragkörper (1) vorgesehen sind, wobei zwei Längsrippen (120) auf der einen Hälfte und die dritte Längsrippe (121) auf der anderen Hälfte des Tragkörpers (1) angeformt sind, derart, daß in der Stecklage der Metallhülse (2) eine Griffmulde (21) zwischen den beiden Längsrippen (120) drehfest aufgenommen ist und die Längsrippen (120,121) an der konischen Mantelfläche der Metallhülse (2) stützend anliegen.

8. Griff nach Anspruch 7, dadurch gekennzeichnet, daß senkrecht zu den Längsrippen (120,121) zwei weitere Längsrippen (122) zur Stützung der Metallhülse (2) auf dem Durchmesser des Tragkörpers (1) angeformt sind, derart, daß die Trennebene der Gießform für die Herstellung des Tragkörpers (1) durch diese Längsrippen (122) verläuft.

9. Griff nach einem der Ansprüche 5 bis 8, dadurch gekennzeichnet, daß der große Flansch (13) am Tragkörper (1) mit zwei parallelen Radialstegen (15) angeformt ist, so daß der Hinterschnitt mit radial ziehbaren Formteilen durchführbar ist.

## Claims

1. Hood-shaped hand-grip, especially a twist grip, for sanitary fittings, which is provided with an inner part for coupling with the upper part of a valve and a metal hand-grip body which determines the shape of the hand-grip, the inner part being in the form of a carrier body (1), on which there is mounted as the hand-grip body a metal sleeve (2), the open end faces of the metal sleeve (2) being closed by the carrier body (1), characterised in that the metal sleeve (2) is essentially conical in shape, flanges (12, 13) are provided on the carrier body (1) at the two end face regions for securing the metal sleeve (2) axially at the end faces, whilst one or more grip recesses (21) is/are formed in the outer wall of the metal sleeve (2), which grip recesses effect non-rotatable coupling between the carrier body (1) and the metal sleeve (2) in the mounted position.

2. Hand-grip according to claim 1, characterised in that the conically tapered region of the metal sleeve (2) faces the fitting, the end face of the metal sleeve (2) that faces the fitting snapping behind a radially projecting collar (11) of the carrier body (1) for securing in the mounted position.

3. Hand-grip according to claim 1 or 2, characterised in that the metal sleeve (2) is supported in the wall region by longitudinal ribs (120, 121, 122) formed on the carrier body (1), parallel to the middle axis (10).

4. Hand-grip according to any one of claims 1 to 3, characterised in that the metal sleeve (2) is made of brass tube having a wall thickness of approximately 0.5 mm.

5. Hand-grip according to any one of claims 1 to 4, characterised in that the carrier body (1) is manufactured from plastics using the injection-moulding method.

6. Hand-grip according to any one of claims 1 to 5, characterised in that three symmetrically arranged grip recesses (21) are indented in the wall of the conical metal sleeve (2) in such a manner that the nearest side faces (210) of two adjacent grip recesses (21) are arranged approximately parallel with one another and each grip recess (21) is most deeply indented at the end face that has the large diameter, which indentation diminishes in size continuously in accordance with the tapering of the metal sleeve (2) so that the end face of the metal sleeve (2) that has the small diameter is circular in cross-section.

7. Hand-grip according to claim 6, characterised in that at least three longitudinal ribs (120, 121) formed parallel with one another are provided on the carrier body (1), two longitudinal ribs (120) being formed on one half of the carrier body (1) and the third longitudinal rib (121) being formed on the other half in such a manner that, when the metal sleeve (2) is in the mounted position, one grip recess (21) is received non-rotatably between the two longitudinal ribs (120) and the longitudinal ribs (120, 121) rest supportingly against the conical wall surface of the metal sleeve (2).

8. Hand-grip according to claim 7, characterised in that two further longitudinal ribs (122) for supporting the metal sleeve (2), which longitudinal ribs are perpendicular to the longitudinal ribs (120, 121), are formed on the diameter of the carrier body (1) in such a manner that the parting plane of the mould for manufacturing the carrier body (1) extends through those longitudinal ribs (122).

9. Hand-grip according to any one of claims 5 to 8, characterised in that the large flange (13) on the carrier body (1) is formed with two parallel radial webs (15) so that it is possible to produce the undercut using radially retractable mould parts.

## Revendications

1. Poignée en forme de chapeau, notamment poignée tournante, pour des robinets sanitaires, comportant une pièce intérieure pour le montage sur la partie supérieure d'un robinet et un corps de préhension, métallique, définissant la forme de la poignée, la partie intérieure étant réalisée sous la forme d'un support (1), portant comme corps de poignée, un manchon métallique (2), les faces frontales ouvertes du manchon métallique (2) étant fermées par le support (1), caractérisée en ce que le manchon métallique (2) a une forme essentiellement conique, sur le support (1), dans les deux zones d'extrémité au niveau des faces, il y a des brides (12, 13) pour la fixation axiale du manchon métallique (2) sur les faces frontales alors que la surface enveloppe du manchon métallique (2) comporte une ou plusieurs gorges de préhension (21) formées dans la manchon, et qui assurent l'accouplement solidaire en rotation entre le support (1) et le manchon métallique (2) en position emmanchée.

2. Poignée selon la revendication 1, caractérisée en ce que le manchon métallique (2) est tourné par son extrémité conique la plus petite vers le robinet, et pour la fixation en position engagée, la face frontale du manchon métallique (2) tournée vers le robinet vient s'encliqueter derrière une collerette (11) radialement en saillie du support (1).

3. Poignée selon la revendication 1 ou 2, caractérisée en ce que le manchon métallique (2) est soutenu par des nervures longitudinales (120, 121, 122) prévues dans la zone de l'enveloppe, et formées sur le support (1), parallèlement à l'axe (10).

4. Poignée selon l'une des revendications 1 à 3, caractérisée en ce que le manchon métallique (2) est réalisé dans un tube en laiton dont la paroi a une épaisseur environ de 0,5 mm.

5. Poignée selon l'une des revendications 1 à 4, caractérisée en ce que le support (1) est fabriqué par injection en matière plastique.

6. Poignée selon l'une des revendications 1 à 5, caractérisée en ce que trois gorges de préhension (21), symétriques, sont réalisées en creux dans l'enveloppe métallique conique (2) de façon que les surfaces latérales (210) les plus proches de deux gorges de préhension (21), voisines, soient sensiblement parallèles et que chaque gorge de préhension (21) comporte sur la face frontale de plus grand diamètre, la partie enfoncée la plus grande, et qui diminue en continu suivant la diminution du manchon métallique (2), de sorte que la face frontale de petit diamètre du manchon métallique (2) présente une section circulaire.

7. Poignée selon la revendication 6, caractérisée en ce qu'au moins trois nervures longitudinales (120, 121) parallèles sont formées sur le support (1), deux nervures longitudinales (120) étant formées sur une moitié et la troisième nervure longitudinale (121) sur l'autre moitié du support (1), de façon que lorsque le manchon métallique (2) est en position enfoncée, une gorge de préhension (21) vient solidairement en rotation entre les deux nervures longitudinales (120), et que les nervures longitudinales (120, 121) s'appuient contre la surface enveloppe conique du manchon métallique (2).

8. Poignée selon la revendication 7, caractérisée en ce que perpendiculairement aux nervures longitudinales (120, 121), deux autres nervures longitudinales (122) pour soutenir le manchon métallique (2) sont formées sur le diamètre du support (1) pour que le plan de séparation du moule servant à fabriquer le support (1) passe par ces nervures longitudinales (122).

9. Poignée selon l'une des revendications 5 à 8, caractérisée en ce que la grande bride (13) du support (1) comporte deux entretoises radiales (15), parallèles, pour que la contre-dépouille puisse se réaliser à l'aide de deux parties de moule qui s'extraient radialement.
